# EUROPEAN PATENT APPLICATION

(11) **EP 4 160 729 A1**
(43) Date of publication of application: **05.04.2023**
(21) Application number: 21813667.9
(22) Date of filing: 21.05.2021
(51) Int. Cl.: H01M 4/133, H01M 4/62, H01M 10/052

(54) **NEGATIVE ELECTRODE FOR ALL-SOLID-STATE SECONDARY CELL, METHOD FOR MANUFACTURING SAME, AND ALL-SOLID-STATE SECONDARY CELL**

(30) Priority: 28.05.2020 JP 2020093372
(71) Applicant: Maxell, Ltd., Kyoto 618-8525 (JP)
(72) Inventor: FURUKAWA, Kazuki, Otokuni-gun, Kyoto 618-8525 (JP); KAMIZORI, Haruki, Otokuni-gun, Kyoto 618-8525 (JP); SATO, Yuta, Otokuni-gun, Kyoto 618-8525 (JP); NISHIMURA, Masaki, Otokuni-gun, Kyoto 618-8525 (JP)
(74) Representative: Diehl & Partner
(86) International application number: PCT/JP2021/019297
(87) International publication number: WO 2021/241423

(57) **Abstract**

Provided are a negative electrode for an all-solid-state secondary battery with a low resistance value, a method for manufacturing the same, and an all-solid-state secondary battery in which the negative electrode is used. The present invention is associated with Goals 12, 3, 7, and 11 of Sustainable Development Goals (SDGs).

A negative electrode for an all-solid-state secondary battery according to the present invention includes a molded body made of a negative electrode mixture containing a solid electrolyte and a negative-electrode material that contains a negative-electrode active material, in which the negative-electrode material contains a carbon material as the negative-electrode active material, a layer containing an oxide having lithium-ion conductivity is formed on a surface of the negative-electrode material, the amount of the oxide is 1 part by mass or more with respect to 100 parts by mass of the carbon material, and the negative electrode contains a sulfide-based solid electrolyte as the solid electrolyte. Also, an all-solid-state secondary battery according to the present invention includes: a positive electrode; a negative electrode; and a solid electrolyte layer located between the positive electrode and the negative electrode, in which the all-solid-state secondary battery includes the negative electrode for an all-solid-state secondary battery according to the present invention as the negative electrode.

## Description

### Technical Field

The present invention relates to a negative electrode for an all-solid-state secondary battery with a low resistance value, a method for manufacturing the same, and an all-solid-state secondary battery in which the negative electrode is used.

### Background Art

In recent years, the development of portable electronic devices such as cellular phones and laptop personal computers, the practical use of electric vehicles, and the like have led to the need for compact and lightweight secondary batteries that have a high capacity and a high energy density.

Currently, in lithium secondary batteries that can meet this demand, especially lithium-ion secondary batteries, a lithium-containing composite oxide such as lithium cobalt oxide (LiCoO₂) or lithium nickel oxide (LiNiO₂) is used as a positive-electrode active material, graphite or the like is used as a negative-electrode active material, and an organic electrolyte solution containing an organic solvent and a lithium salt is used as a nonaqueous electrolyte.

With the further development of devices that use lithium-ion secondary batteries, there is demand for lithium-ion secondary batteries having a longer life, a higher capacity, and a higher energy density.

Regarding increasing the capacity of a lithium-ion secondary battery (nonaqueous electrolyte secondary battery) having an organic electrolyte solution, Patent Document 1 proposes a technique for covering a surface of a carbon material, which is a negative-electrode active material, with a solid electrolyte having lithium-ion conductivity in order to reduce the irreversible capacity of the negative electrode, for example.

Further, there is also demand for lithium-ion secondary batteries having a longer life, a higher capacity, a higher energy density, and higher reliability.

However, since an organic electrolyte solution used in a lithium-ion secondary battery contains a flammable organic solvent, the organic electrolyte solution may abnormally generate heat when an abnormal situation such as a short circuit occurs in the battery. In recent years, as the energy density of lithium-ion secondary batteries and the amount of an organic solvent in the organic electrolyte solution have been increased, there is a growing need for reliability in lithium-ion secondary batteries.

Under these circumstances, all-solid-state lithium secondary batteries (all-solid-state secondary batteries) in which no organic solvents are used have been gaining attention. An all-solid-state secondary battery includes, instead of conventional organic solvent-based electrolytes, a molded body made of a solid electrolyte in which no organic solvents are used, and is very safe because there is no risk that the solid electrolyte will abnormally generate heat.

All-solid-state secondary batteries are very safe as well as being highly reliable and highly environmentally resistant, and have a long life. Therefore, it is anticipated that all-solid-state secondary batteries will become maintenance-free batteries that can continue to contribute to the development of society, as well as to safety and security. Providing all-solid-state secondary batteries to society will contribute to achievement of the following goals of the 17 Sustainable Development Goals (SDGs) established by the United Nations: Goal 12 (to ensure sustainable production and consumption patterns), Goal 3 (to ensure healthy lives and promote well-being for all people of all ages), Goal 7 (to ensure access for all people to affordable, reliable, sustainable and modern energy), and Goal 11 (to achieve inclusive, safe, resilient and sustainable cities and human settlements).

Also, various improvements have been attempted in all-solid-state secondary batteries. Patent Document 2 proposes use of, in an all-solid-state secondary battery, a covered negative-electrode active material that is inhibited from generating heat and whose resistance is reduced by covering a structural defective portion of the negative-electrode active material having a graphite structure with particulate lithium niobate having an average particle size of 1.5 nm or less, for example.

### Prior Art Documents

### Patent Document

[Patent Document 1] WO 2017/169616
[Patent Document 2] JP 2017-54615A

### Disclosure of Invention

### Problem to be Solved by the Invention

Nowadays, the number of fields to which all-solid-state secondary batteries are applied is rapidly increasing. It is also conceivable that they may be used in, for example, applications that require electric discharge at large current values, and therefore, there is a need to enhance the load characteristics to meet these requirements. Also, a method for charging an all-solid-state secondary battery at a constant current until the battery voltage reaches a predetermined value (constant current charging), and then charging the all-solid-state secondary battery at a constant voltage until the current value decreases and reaches a predetermined value (constant voltage charging) is generally used as a method for charging an all-solid-state secondary battery, and the charging capacity during constant current charging is preferably large in order to improve rapid charging properties of the all-solid-state secondary battery, for example. Because examples of a means for improving load properties of the all-solid-state secondary battery and increasing charging capacity (CC capacity) during constant current charging include reducing the resistance value of the negative electrode in this manner, there is demand for the development of techniques for achieving this.

As described above, Patent Document 2 discloses that the resistance of the negative-electrode active material having a graphite structure can be reduced by covering the structural defective portion of the negative-electrode active material with small particulate lithium niobate. However, it is not possible to reduce the resistance value of the negative electrode to an extent where the properties of the all-solid-state secondary battery are sufficiently improved.

The present invention was achieved in light of the aforementioned circumstances, and it is an object thereof to provide a negative electrode for an all-solid-state secondary battery having a low resistance value, a method for manufacturing the negative electrode, and an all-solid-state secondary battery in which the negative electrode is used.

### Means for Solving Problem

A negative electrode for an all-solid-state secondary battery according to the present invention includes a molded body made of a negative-electrode mixture containing a solid electrolyte and a negative-electrode material that contains a negative-electrode active material, in which the negative-electrode material contains a carbon material as the negative-electrode active material, and a layer containing an oxide having lithium-ion conductivity is formed on a surface of the negative-electrode material, the amount of the oxide is 1 part by mass or more with respect to 100 parts by mass of the carbon material, and the negative electrode contains a sulfide-based solid electrolyte as the solid electrolyte.

The negative electrode for an all-solid-state secondary battery according to the present invention can be manufactured using a manufacturing method according to the present invention, the method including the following negative-electrode material formation step (A), and a step (B) of forming a molded body made of a negative-electrode mixture using the negative-electrode material obtained through the negative-electrode material formation step (A) and a sulfide-based solid electrolyte.

Here, the negative-electrode material formation step (A) includes (1) a step (i-1) of adhering an oxide having lithium-ion conductivity or a material for forming the oxide to a surface of a carbon material, and a step (i-2) of forming a layer containing the oxide on the surface of the carbon material by firing the carbon material that has undergone the step (i-1) such that the amount of the oxide is 1 part by mass or more with respect to 100 parts by mass of the carbon material, or (2) a step (ii) of forming a layer containing an oxide having lithium-ion conductivity on a surface of a carbon material by kneading the carbon material and the oxide such that the amount of the oxide is 1 part by mass or more with respect to 100 parts by mass of the carbon material.

Also, an all-solid-state secondary battery according to the present invention includes: a positive electrode; a negative electrode; and a solid electrolyte layer located between the positive electrode and the negative electrode, in which the all-solid-state secondary battery includes the negative electrode for an all-solid-state secondary battery according to the present invention as the negative electrode.

### Effects of the Invention

According to the present invention, it is possible to provide a negative electrode for an all-solid-state secondary battery with a low resistance value, a method for manufacturing the same, and an all-solid-state secondary battery in which the negative electrode is used.

### Brief Description of Drawings

[FIG. 1] FIG. 1 is a schematic cross-sectional view showing an example of an all-solid-state secondary battery according to the present invention.
[FIG. 2] FIG. 2 is a schematic plan view showing another example of an all-solid-state secondary battery according to the present invention.
[FIG. 3] FIG. 3 is a cross-sectional view taken along line I-I in FIG. 2.

### Description of the Invention

### Negative Electrode for All-Solid-State Secondary Battery

A negative electrode for an all-solid-state secondary battery according to the present invention includes a molded body made of a negative-electrode mixture containing a solid electrolyte and a negative-electrode material that contains a negative-electrode active material. A carbon material that is a negative-electrode active material and is provided with a layer containing an oxide having lithium-ion conductivity on a surface of the carbon material is used as a negative-electrode material, and a sulfide-based solid electrolyte is used as a solid electrolyte.

Because the carbon material, which is used as a negative-electrode active material, is generally hydrophobic and has low affinity with a sulfide-based solid electrolyte, a favorable interface is unlikely to form therebetween in the negative electrode (the molded body made of the negative-electrode mixture), and it is difficult to reduce the resistance value of the negative electrode.

In view of this, in the present invention, a carbon material obtained by forming a layer containing an oxide having lithium-ion conductivity on a surface of the carbon material is used as a negative-electrode material. The negative-electrode material has high affinity with sulfide-based solid electrolytes, and a favorable interface can be formed. Therefore, because the negative electrode for an all-solid-state secondary battery according to the present invention has a low resistance value and high lithium ion acceptability, it is possible to increase the CC capacity of an all-solid-state secondary battery in which this negative electrode is used (i.e., the all-solid-state secondary battery according to the present invention), and to improve load characteristics thereof.

Examples of the negative electrode for an all-solid-state secondary battery include molded bodies (e.g., pellets) formed by molding a negative-electrode mixture, and those having a structure in which a layer formed by a negative-electrode mixture molded body (negative-electrode mixture layer) is formed on a current collector.

Examples of the carbon material constituting a negative-electrode material include graphite (natural graphite; artificial graphite obtained by graphitizing easily-graphitizable carbon such as pyrolytic carbon, mesophase carbon microbeads, or carbon fibers at 2800°C or more; etc.), easily-graphitizable carbon (soft carbon), hardly-graphitizable carbon (hard carbon), pyrolytic carbon, coke, glassy carbon, fired products obtained by firing organic polymer compounds, mesophase carbon microbeads, carbon fibers, and activated carbon, and these materials may be used alone or in combination of two or more.

An oxide contained in a layer formed on a surface of the negative-electrode material has lithium-ion conductivity, and examples thereof include lithium niobium oxides (such as LiNbOs), lithium titanium oxides (such as Li₄Ti₅O₁₂), lithium phosphorus oxides (such as Li₃PO₄), lithium boron oxides (such as Li₃BO₃), lithium tungsten oxides (such as Li₄WO₅), and lithium aluminum oxides (such as LiAlO₂). Note that Li₃PO₄ is an oxide-based solid electrolyte, and oxide-based solid electrolytes other than Li₃PO₄, such as Li₇La₃Zr₂O₁₂, LiTi(PO₄)₃, LiGe(PO₄)₃, and LiLaTiO₃ can also be used as a material for forming a layer formed on the surface of the negative-electrode material.

From the viewpoint of satisfactorily ensuring the effect of reducing the resistance value of the negative electrode for an all-solid-state secondary battery, the amount of the oxide having lithium-ion conductivity in the negative-electrode material is 1 part by mass or more, and is preferably 1.5 parts by mass or more with respect to 100 parts by mass of the carbon material. However, if the amount of the oxide is excessively large, the capacity of the negative-electrode active material may decrease or the conductivity of the molded body made of a negative-electrode mixture may decrease. Therefore, the amount of the oxides having lithium-ion conductivity in the negative-electrode material is preferably 20 parts by mass or less, and more preferably 10 parts by mass or less with respect to 100 parts by mass of the carbon material.

The oxide contained in the layer formed on the surface of the negative-electrode material is preferably amorphous because the CC capacity of the all-solid-state secondary battery further enhances the effect of enhancing the load characteristics. Whether the oxide is an amorphous oxide can be confirmed by checking whether a peak indicating crystals of the oxide appears or is broad when X-ray diffraction (XRD) analysis is performed, for example.

The negative-electrode mixture in the negative electrode for an all-solid-state secondary battery can contain the negative-electrode material and other negative-electrode active materials that are usually used in lithium-ion secondary batteries. However, if other negative-electrode active materials are used together with the negative-electrode material as the negative-electrode active materials, the ratio of the negative-electrode material in all of the negative-electrode active materials is preferably 60 mass% or more. Note that, because a negative-electrode active material other than the negative-electrode material need not be used in the negative-electrode mixture in the negative electrode for an all-solid-state secondary battery, a preferred upper limit of the ratio of the negative-electrode material in all of the negative-electrode active materials is 100 mass%.

It is preferable that the content of all of the negative-electrode active materials that include the negative-electrode material in the negative-electrode mixture is 30 to 70 mass%.

Examples of the sulfide-based solid electrolytes in the negative electrode for an all-solid-state secondary battery include particles of Li₂S-P₂S₅-based glass, Li₂S-SiS₂-based glass, Li₂S-P₂S₅-GeS₂-based glass, and Li₂S-B₂S₃-based glass. In addition, LGPS-based solid electrolyte (e.g., Li₁₀GeP₂S₁₂) and argyrodite-type solid electrolyte (represented by Li_{7-x+y}PS₆₋ₓCl_{x+y} (where 0.05≤y≤0.9, -3.0x+1.8≤y≤-3.0x+5.7) such as Li₆PS₅Cl, Li₇₋ₐPS₆₋ₐCl_{b}Br_{c} (where a=b+c, 0<a≤1.8, and 0.1≤b/c≤10.0), and the like), which have gained attention in recent years due to their high lithium -ion conductivity can also be used. Specifically, sulfide-based solid electrolytes containing lithium and phosphorus are preferable because such sulfide-based solid electrolytes have high lithium-ion conductivity, and in particular, argyrodite-type materials that have high lithium -ion conductivity and high chemical stability are more preferable.

From the viewpoint of reducing grain boundary resistance, the average particle diameter of the sulfide-based solid electrolyte is preferably 0.1 µm or more, and more preferably 0.2 µm or more, and from the viewpoint of forming a sufficient contact interface between the negative-electrode material and the solid electrolytes, is preferably 10 µm or less, and more preferably 5 µm or less.

The average particle diameter of the solid electrolyte and the average particle diameter of the later-described positive-electrode active material used in this specification refer to the value of the 50% diameter (D₅₀) in a volume-based integrated fraction when the integrated volume is calculated based on particles with a small particle size, using a particle size distribution measuring device (Microtrac particle size analyzer "HRA9320" manufactured by NIKKISO CO., LTD., etc.).

Other solid electrolytes (such as hydride-based solid electrolytes and oxide-based solid electrolytes) can also be used for the negative electrode for an all-solid-state secondary battery together with the sulfide-based solid electrolyte. However, the ratio of the solid electrolyte other than the sulfide-based solid electrolyte in the negative electrode for an all-solid-state battery to the total amount of solid electrolyte particles is preferably 30 mass% or less. Note that, because all of the solid electrolytes in the negative electrode for an all-solid-state secondary battery may be sulfide-based solid electrolytes, the lower limit of the ratio of the solid electrolyte other than the sulfide-based solid electrolyte to the total amount of solid electrolytes is 0 mass%.

Examples of the hydride-based solid electrolytes include LiBH₄, and solid solutions of LiBH₄ and a following alkali metal compound (e.g., solid solutions in which the mole ratio between LiBH₄ and the alkali metal compound is 1:1 to 20:1). At least one selected from the group consisting of lithium halides (e.g., Lil, TiBr, LiF, and LiCl), rubidium halides (e.g., RbI, RbBr, RbF, and RbCl), cesium halides (e.g., CsI, CsBr, CsF, and CsCl), lithium amides, rubidium amides, and cesium amides can be used as the alkali metal compound in the above-mentioned solid solution.

Examples of the oxide-based solid electrolytes include Li₇La₃Zr₂O₁₂, LiTi(PO₄)₃, LiGe(PO₄)₃, and LiLaTiO₃.

It is preferable that the average particle diameter of the solid electrolyte other than the sulfide-based solid electrolytes is preferably about the same as the average particle diameter of the sulfide-based solid electrolytes.

It is preferable that the content of the solid electrolyte in the negative-electrode mixture is 4 to 70 mass%.

A conductive assistant such as carbon black or graphene can also be added to the negative-electrode mixture as needed. When the negative-electrode mixture contains a conductive assistant, the content of the conductive assistant is preferably 1 to 10 mass%.

A resin binder may or may not be added to the negative-electrode mixture. Examples of the resin binder include fluororesins such as polyvinylidene fluoride (PVDF). However, because the resin binder functions as a resistance component in the negative-electrode mixture, it is desirable that the amount of the resin binder is as small as possible. Therefore, it is preferable that the resin binder is not added to the negative-electrode mixture, and if the resin binder is added thereto, the content of the resin binder is 0.5 mass% or less. The content of the resin binder in the negative-electrode mixture is more preferably 0.3 mass% or less, and even more preferably 0 mass% (i.e., no resin binder is added).

When a current collector is used in the negative electrode for an all-solid-state secondary battery, examples of the current collector include foils, punched metals, nets, expanded metals, and foamed metals that are made of a metal such as copper or nickel; and carbon sheets.

The negative electrode for an all-solid-state secondary battery can be manufactured using a manufacturing method including a negative-electrode material formation step (A), and a step (B) of forming a molded body made of a negative-electrode mixture using the negative-electrode material obtained through the negative-electrode material formation step (A) and a sulfide-based solid electrolyte.

The negative-electrode material formation step (A) includes a step (i-1) of adhering an oxide having lithium-ion conductivity or a material for forming the oxide to a surface of the carbon material, and a step (i-2) of forming a layer containing the oxide on the surface of the carbon material by firing the carbon material that has undergone the step (i-1), and obtaining the negative-electrode material.

In the step (i-1), a method for applying, to the surface of the carbon material, a composition prepared by dissolving or dispersing the oxide in a solvent; a method for dry-mixing the carbon material and the oxide together; and the like can be adopted as the method for adhering an oxide having lithium-ion conductivity to the surface of the carbon material. Also, in the step (i-1), a method for applying, to the surface of the carbon material, a composition prepared by dissolving or dispersing the material in a solvent, and the like can be adopted as the method for adhering the material for forming the oxide to the surface of the carbon material.

It is possible to use alcohols such as methanol and ethanol; non-polar aprotic solvents such as hydrocarbon solvents including hexane, heptane, octane, nonane, decane, decaline, toluene, and xylene; and the like, as a solvent in the composition containing the oxide and the composition containing the material for forming the oxide. Note that, if the oxide to be added to the composition or the material for forming the oxide is likely to react with water, it is preferable to use a dehydrated solvent (super dehydrated solvent) in which the water content is reduced to 0.001 mass% (10 ppm) or less. On the other hand, if the oxide or the material for forming the oxide is unlikely to react with water, water can be used as a solvent for the composition.

There is no particular limitation on the method for applying the composition to the carbon material, and various known application methods can be adopted. Also, there is no particular limitation on the method for dry-mixing the oxide and the carbon material together, and various known mixing methods can be adopted.

In the step (i-2), a layer containing an oxide having lithium-ion conductivity is formed on the surface of the carbon material by firing the carbon material obtained through the step (i-1). Note that, if the composition containing the material for forming the oxide is applied to the carbon material in the step (i-1), the layer containing the oxide is formed while synthesizing the oxide through a reaction of the material for forming the oxide in the step (i-2).

There is no particular limitation on the firing method used in the step (i-2), and various known firing methods can be adopted. The firing temperature in the step (i-2) is preferably a temperature at which the oxide can form a layer in an amorphous state, and specifically, is preferably 450°C or less, and is preferably 300°C or more. The firing time in the step (i-2) is preferably 0.5 to 3 hours.

Also, the negative-electrode material formation step (A) can also include a step (ii) of forming a layer containing an oxide having lithium-ion conductivity on the surface of the carbon material by kneading a carbon material and the oxide, instead of the step (i-1) and the step (i-2).

In the step (ii), a negative-electrode material is obtained by forming a layer containing an oxide having lithium-ion conductivity on the surface of a carbon material by kneading the carbon material and the oxide having lithium-ion conductivity, i.e., mixing the carbon material and the oxide while a shearing force is being applied thereto. There is no particular limitation on the method for kneading the carbon material and the oxide as long as the carbon material and the oxide can be mixed together while a shearing force is being applied thereto, and it is possible to adopt a method using various known apparatuses.

Then, in the step (B), a molded body made of a negative-electrode mixture is formed using the negative-electrode material obtained through the negative-electrode material formation step (A) and a sulfide-based solid electrolyte.

A molded body made of a negative-electrode mixture can be formed by compressing, using compression molding or the like, the negative-electrode mixture prepared by mixing the negative-electrode material and a sulfide-based solid electrolyte, and a conductive assistant, a binder, and the like that are added as needed, for example. When a negative electrode for an all-solid-state secondary battery is constituted only by a molded body made of a negative-electrode mixture, the negative electrode for an all-solid-state secondary battery can be obtained through the step (B).

On the other hand, when a negative electrode for an all-solid-state secondary battery has a current collector, the negative electrode for an all-solid-state secondary battery can be obtained by attaching a molded body made of a negative-electrode mixture obtained through the step (B) to a current collector through clamping or the like.

From the viewpoint of increasing the capacity of a battery, the thickness of a molded body made of a negative-electrode mixture (when the negative electrode has a current collector, the thickness thereof refers to the thickness of the molded body made of a positive-electrode mixture per side of the current collector; and the same applies to the following) is preferably 200 µm or more. Note that, in general, the load characteristics of the battery tend to be improved by reducing the thickness of a positive electrode and a negative electrode. However, according to the present invention, it is possible to enhance the load characteristics thereof even when a molded body made of a negative-electrode mixture has a thickness of 200 µm or more. Therefore, the present invention has significant effects when the thickness of the molded body made of a negative-electrode mixture is 200 µm or more, for example. Also, the thickness of the molded body made of a negative-electrode mixture is usually 3000 µm or less.

### All-Solid-State Secondary Battery

An all-solid-state secondary battery according to the present invention includes a positive electrode, a negative electrode, and a solid electrolyte layer located between the positive electrode and the negative electrode, in which the negative electrode for an all-solid-state secondary battery according to the present invention is used as the negative electrode.

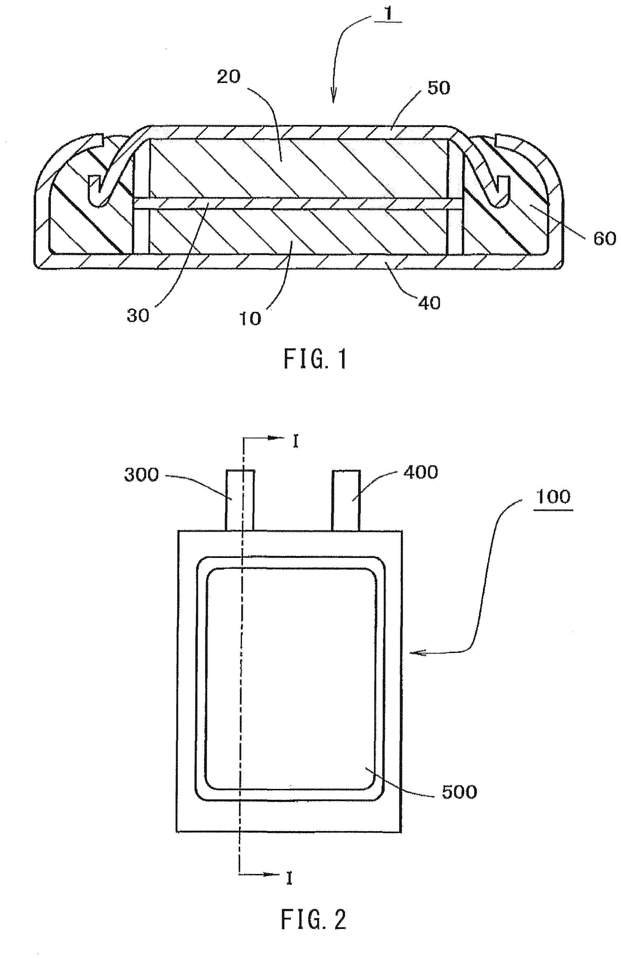

FIG. 1 is a schematic cross-sectional view showing an example of an all-solid-state secondary battery according to the present invention. An all-solid-state secondary battery 1 shown in FIG. 1 has a configuration in which a positive electrode 10, a negative electrode 20, and a solid electrolyte layer 30 located between the positive electrode 10 and the negative electrode 20 are sealed in an exterior body constituted by an exterior can 40, a sealing can 50, and a resin gasket 60 located therebetween.

The sealing can 50 is fitted into the opening portion of the exterior can 40 via the gasket 60, and the opening portion of the exterior can 40 is sealed by squeezing the end portion of the opening of the exterior can 40 inward and thereby bringing the gasket 60 into contact with the sealing can 50. Thus, a structure in which the inside of a battery is hermetically sealed is formed.

An exterior can and a sealing can made of stainless steel or the like can be used. Further, polypropylene, nylon, or the like can be used as the material of the gasket. In addition, when heat resistance is required according to the application of a battery, heat-resistant resins whose melting point is higher than 240°C, such as fluororesins such as tetrafluoroethylene-perfluoroalkoxyethylene copolymers (PFA); polyphenylene ether (PEE), polysulfone (PSF), polyarylate (PAR), polyethersulfone (PES), polyphenylene sulfide (PPS), and polyether ether ketone (PEEK), can also be used as the material of the gasket. When a battery is used for an application in which heat resistance is required, a glass hermetic seal can also be used to seal the battery.

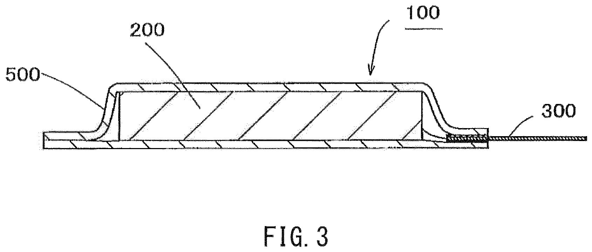

FIGS. 2 and 3 are schematic diagrams showing another example of the all-solid-state secondary battery according to the present invention. FIG. 2 is a plan view of the all-solid-state secondary battery, and FIG. 3 is a cross-sectional view taken along line I-I in FIG. 2.

An all-solid-state secondary battery 100 shown in FIGS. 2 and 3 has a configuration in which an electrode body 200 that includes a positive electrode, a solid electrolyte layer, and the negative electrode according to the present invention is housed in a laminate-film exterior body 500 formed using two metal laminate films, and the laminate-film exterior body 500 is sealed by thermally welding the outer peripheral regions of the upper and lower metal laminate films to each other. Note that the layers included in the laminate-film exterior body 500, and the positive electrode, the negative electrode, and separators included in the electrode body are not distinctively shown in FIG. 3 in order to avoid making FIG. 3 complicated.

The positive electrode included in the electrode body 200 is connected to a positive electrode external terminal 300 in the battery 100, and while not shown, the negative electrode included in the electrode body 200 is also connected to a negative electrode external terminal 400 in the battery 100. One end of the positive electrode external terminal 300 and one end of the negative electrode external terminal 400 are drawn out of the laminate-film exterior body 500 so as to enable connection to external devices and the like.

### Positive Electrode

The positive electrode of the all-solid-state secondary battery includes a molded body made of a positive electrode mixture containing a positive-electrode active material, a conductive assistant, a solid electrolyte, and the like, and examples thereof include a positive electrode constituted only by the molded body, and a positive electrode having a structure in which the molded body and a current collector are formed as a single body.

There is no particular limitation on the positive-electrode active material as long it is a positive-electrode active material that is used in conventionally known lithium-ion secondary batteries, that is, an active material that is capable of intercalation and deintercalation of Li ions. Specific examples of the positive-electrode active material include spinel-type lithium manganese composite oxides represented by LiMₓMn₂₋ₓO₄ (where M is at least one element selected from the group consisting of Li, B, Mg, Ca, Sr, Ba, Ti, V, Cr, Fe, Co, Ni, Cu, Al, Sn, Sb, In, Nb, Mo, W, Y, Ru, and Rh, and *x* satisfies 0.01≤x≤0.5), layered compounds represented by LiₓMn_{(1-y-x)}Ni_{y}M_{z}O₍₂₋ₖ₎F₁ (where M is at least one element selected from the group consisting of Co, Mg, Al, B, Ti, V, Cr, Fe, Cu, Zn, Zr, Mo, Sn, Ca, Sr, and W, and *x y, z, k,* and *l* satisfy 0.8≤x≤1.2, 0<y<0.5, 0≤z≤0.5, k+1<1, -0.1≤k≤0.2, and 0≤1≤0.1), lithium cobalt composite oxides represented by LiCo₁₋ₓMₓO₂ (where M is at least one element selected from the group consisting ofAl, Mg, Ti, Zr, Fe, Ni, Cu, Zn, Ga, Ge, Nb, Mo, Sn, Sb, and Ba, and x satisfies 0≤x≤0.5), lithium nickel composite oxides represented by LiNi₁₋ₓMₓO₂ (where M is at least one element selected from the group consisting of Al, Mg, Ti, Zr, Fe, Co, Cu, Zn, Ga, Ge, Nb, Mo, Sn, Sb, and Ba, and x satisfies 0≤x≤0.5), olivine-type composite oxides represented by LiM₁₋ₓNₓPO₄ (where M is at least one element selected from the group consisting of Fe, Mn, and Co, N is at least one element selected from the group consisting ofAl, Mg, Ti, Zr, Ni, Cu, Zn, Ga, Ge, Nb, Mo, Sn, Sb, and Ba, and *x* satisfies 0≤x≤0.5), and a lithium titanium composite oxide represented by Li₄Ti₅O₁₂. These compounds may be used alone or in combination of two or more.

The average particle diameter of the positive-electrode active material is preferably 1 µm or more, more preferably 2 µm or more, and preferably 10 µm or less, and more preferably 8 µm or less. Note that the positive-electrode active material may be primary particles or secondary particles obtained through aggregation of primary particles. When a positive-electrode active material having an average particle diameter in the above range is used, a large interface with the solid electrolyte can be obtained, thus enhancing load characteristics of the battery.

It is preferable that the positive-electrode active material includes, on its surface, a reaction suppressing layer for suppressing a reaction between the positive-electrode active material and the solid electrolyte.

Direct contact between the positive-electrode active material and the solid electrolyte in the molded body made of a positive electrode mixture may cause oxidation of the solid electrolyte, resulting in the formation of a resistance layer, and reducing ion conductivity of the molded body. As a result of preventing direct contact between the positive-electrode active material and the solid electrolyte by providing a reaction suppressing layer for suppressing a reaction with the solid electrolyte on the surface of the positive-electrode active material, it is possible to suppress a reduction in the ion conductivity of the molded body due to oxidation of the solid electrolyte.

It is sufficient that the reaction suppressing layer is made of a material that has ion conductivity and is capable of suppressing a reaction between the positive-electrode active material and the solid electrolyte. Examples of the material capable of forming the reaction suppressing layer include oxides that contain Li and at least one element selected from the group consisting of Nb, P, B, Si, Ge, Ti, and Zr, and specific examples thereof include Nb-containing oxides such as LiNbO₃; Li₃PO₄, Li₃BO₃, Li₄SiO₄, Li₄GeO₄, LiTiO₃, and LiZrO₃. The reaction suppressing layer may contain only one or two or more of these oxides. Furthermore, a plurality of oxides of these oxides may form a composite compound. Out of these oxides, Nb-containing oxides are preferably used, and LiNbOs is further preferably used.

It is preferable that the reaction suppressing layer is present on a surface at 0.1 to 1.0 parts by mass with respect to 100 parts by mass of the positive-electrode active material. When the reaction suppressing layer is present in this range, it is possible to favorably suppress a reaction between the positive-electrode active material and the solid electrolyte.

Examples of the method for forming the reaction suppressing layer on the surface of the positive-electrode active material include a sol-gel method, a mechanofusion method, a CVD method, and a PVD method.

It is preferable that the content of the positive-electrode active material contained in the positive electrode mixture is 60 to 95 mass%.

Examples of the conductive assistant of the positive electrode include carbon materials such as graphite (natural graphite and artificial graphite), graphene, carbon black, carbon nanofiber, and carbon nanotubes. It is preferable that the content of the conductive assistant in the positive-electrode active material is 1 to 10 mass%.

It is possible to use one or two or more of various sulfide-based solid electrolytes, hydride-based solid electrolytes, and oxide-based solid electrolytes listed above as those capable of being used in the negative electrode as a positive-electrode solid electrolyte. It is desirable to add a sulfide-based solid electrolyte thereto in order to further improve the battery characteristics.

It is preferable that the content of the solid electrolyte in the positive-electrode mixture is 4 to 30 mass%.

A resin binder may or may not be added to the positive-electrode mixture. Examples of the resin binder include fluororesins such as polyvinylidene fluoride (PVDF). However, because the resin binder functions as a resistance component in the positive-electrode mixture, it is desirable that the amount of the resin binder is as small as possible. Therefore, it is preferable that the resin binder is not added to the positive-electrode mixture, and if the resin binder is added thereto, the content of the resin binder is 0.5 mass% or less. The content of the resin binder in the positive-electrode mixture is more preferably 0.3 mass% or less, and even more preferably 0 mass% (i.e., no resin binder is added).

When a current collector is used in the positive electrode, examples of the current collector include foils, punched metals, nets, expanded metals, and foamed metals that are made of a metal such as aluminum or stainless steel; and carbon sheets.

A molded body made of a positive-electrode mixture can be formed by compressing, using compression molding or the like, the positive-electrode mixture prepared by mixing the positive-electrode material, a conductive assistant, and a solid electrolyte, and a binder, and the like that are added as needed, for example.

When a positive electrode has a current collector, the positive electrode can be manufactured by attaching a molded body made of a positive-electrode mixture formed using the above method to the current collector through clamping or the like.

From the viewpoint of increasing the capacity of a battery, the thickness of a molded body made of a positive-electrode mixture (when the positive electrode has a current collector, the thickness thereof refers to the thickness of the molded body made of a positive-electrode mixture per side of the current collector; and the same applies to the following) is preferably 200 µm or more. Also, the thickness of the molded body made of a positive-electrode mixture is usually 2000 µm or less.

### Solid Electrolyte Layer

It is possible to use one or two or more of various sulfide-based solid electrolytes, hydride-based solid electrolytes, and oxide-based solid electrolytes listed above as those capable of being used in the negative electrode, as the solid electrolyte in the solid electrolyte layer. However, it is desirable to add a sulfide-based solid electrolyte thereto in order to further improve the battery characteristics, and it is more desirable to add a sulfide-based solid electrolyte to all of the positive electrode, the negative electrode, and the solid electrolyte layer.

The solid electrolyte layer may include, as a support, a porous material such as nonwoven fabric made of a resin.

The solid electrolyte layer can be formed using a method in which a solid electrolyte is compressed through compression molding or the like; a method in which a composition for forming a solid electrolyte layer that is prepared by dispersing a solid electrolyte in a solvent is applied to a substrate, the positive electrode, or the negative electrode and is then dried, and a compression molding process such as pressing processing is optionally performed; and the like.

It is preferable to select a solvent that is less likely to deteriorate the solid electrolyte as the solvent used in the composition for forming a solid electrolyte layer. In particular, the sulfide-based solid electrolytes and the hydride-based solid electrolytes cause chemical reactions with a minute amount of water, and therefore, it is preferable to use non-polar aprotic solvents such as hydrocarbon solvents including hexane, heptane, octane, nonane, decane, decaline, toluene, and xylene. In particular, it is more preferable to use a super dehydrated solvent in which the water content is reduced to 0.001 mass% (10 ppm) or less. Also, fluorine-based solvents such as "Vertrel (registered trademark)" manufactured by Du Pont-Mitsui Fluorochemicals Co., Ltd., "Zeorora (registered trademark)" manufactured by Zeon Corporation, and "Novec (registered trademark)" manufactured by Sumitomo 3M Limited, and nonaqueous organic solvents such as dichloromethane and diethyl ether can also be used.

The thickness of the solid electrolyte layer is preferably 100 to 300 µm.

### Electrode Body

The positive electrode and the negative electrode can be used for a battery in the form of a layered electrode body obtained by layering these electrodes with the solid electrolyte layer being located therebetween or in the form of a wound electrode body obtained by winding the above-mentioned layered electrode body.

Note that it is preferable to form the electrode body by performing compression molding in the state in which the positive electrode, the negative electrode, and the solid electrolyte layer are layered from the viewpoint of enhancing the mechanical strength of the electrode body.

### Form of Battery

The form of an all-solid-state secondary battery may be a form in which an all-solid-state secondary battery includes an exterior body constituted by an exterior can, a sealing can, and a gasket, that is, a form generally called a coin cell or a button cell as shown in FIG. 1, and a form in which an all-solid-state secondary battery includes an exterior body having a bottomed metal tubular (cylindrical or rectangular cylindrical) exterior can having a sealing structure for sealing an opening portion thereof, in addition to a form in which an all-solid-state secondary battery includes an exterior body constituted by a resin film or metal-resin laminate films as shown in FIGS. 2 and 3.

### Examples

Hereinafter, the present invention will be described in detail based on examples. However, the present invention is not limited to the following examples.

### Example 1

### Formation of Solid Electrolyte Layer

80 mg of the sulfide-based solid electrolyte (Li₆PS₅Cl) was placed in a powder molding mold having a diameter of 10 mm and was subjected to compression molding using a pressing machine to form a solid electrolyte layer.

### Production of Negative Electrode

A composition for forming a coating layer was prepared by mixing 0.1 mol of lithium and 0.125 mol of titanium tetraisopropoxide in 500 mL of dehydrated ethanol. Then, the composition for forming a coating layer was applied onto 500 g of graphite at a speed of 2 g/min for 180 min using a coating apparatus equipped with a rolling fluidized bed. A negative-electrode material (1), which is made of graphite having a coating layer containing an oxide (Li₄Ti₅O₁₂) with lithium-ion conductivity on a surface of the graphite, was obtained by firing the obtained powder at 400°C for 30 min. The amount of the oxide in the negative-electrode material (1) was 1.91 parts by mass with respect to 100 parts by mass of graphite. Also, it was confirmed using the above method that the oxide contained in the coating layer was amorphous in the negative-electrode material (1).

A negative-electrode mixture was prepared by mixing the negative-electrode material (1), graphene, and the same sulfide-based solid electrolyte as used for the solid electrolyte layer at a mass ratio of 45 : 5 : 50 and kneading the resulting mixture well. Then, 15 mg of the negative-electrode mixture was placed on the solid electrolyte layer in the powder molding mold and was subjected to compression molding using a pressing machine to form a negative electrode constituted by a molded body made of negative-electrode mixture on the solid electrolyte layer.

### Formation of Layered Electrode Body

An electrode formed by attaching a cylindrical molded body made of Li metal and a cylindrical molded body made of In metal to each other was used as a counter electrode. This counter electrode was placed on a surface of the solid electrolyte layer in the powder molding mold on a side opposite to the negative electrode, and compression molding was performed using a pressing machine to form a layered electrode body.

### Assembly of Model Cell

The above-mentioned layered electrode body was used to produce an all-solid-state battery (model cell) having the same planar structure as that shown in FIG. 2. A negative-electrode current collecting foil (SUS foil) and a counter-electrode current collecting foil (SUS foil) were attached to a surface of an aluminum laminate film included in a laminate-film exterior body on the interior side of the exterior body so as to be adjacent to each other with a certain distance being provided therebetween. Current collecting foils cut out into a shape provided with a main body portion that is to oppose a surface on the negative electrode side or the counter electrode side of the layered electrode body, and a negative electrode external terminal 400 and a counter electrode external terminal 300 that protrude from the main body portion toward the outside of the battery were used.

A model cell was obtained by placing the layered electrode body on the negative-electrode current collecting foil of the laminate-film exterior body, covering the layered electrode body with the laminate-film exterior body such that the counter-electrode current collecting foil was disposed on the counter electrode of the layered electrode body, and thermally welding the remaining three sides of the laminate-film exterior body under vacuum to seal the laminate-film exterior body.

### Example 2

A composition for forming a coating layer was prepared by mixing 0.1 mol of lithium and 0.1 mol of niobium pentoxide in 500 mL of dehydrated ethanol. Then, the composition for forming a coating layer was applied onto 500 g of graphite at a speed of 2 g/min for 184 min using a coating apparatus equipped with a rolling fluidized bed. A negative-electrode material (2), which is made of graphite having a coating layer containing an oxide (LiNbOs) with lithium-ion conductivity on a surface of the graphite, was obtained by firing the obtained powder at 400°C. The amount of the oxide in the negative-electrode material (2) was 2.55 parts by mass with respect to 100 parts by mass of graphite. Also, it was confirmed using the above method that the oxide contained in the coating layer was amorphous in the negative-electrode material (2).

A model cell was produced in the same manner as in Example 1, except that a negative electrode was produced in the same manner as in Example 1 except that the negative-electrode material (2) was used instead of the negative-electrode material (1), and the produced negative electrode was used.

### Example 3

A negative-electrode material (3) was produced in the same manner as in Example 2, except that the composition for forming a coating layer was applied to graphite at a speed of 2 g/min for 132 min. The amount of the oxide in the negative-electrode material (3) was 1.83 parts by mass with respect to 100 parts by mass of graphite. Also, it was confirmed using the above method that the oxide contained in the coating layer was amorphous in the negative-electrode material (3).

A model cell was produced in the same manner as in Example 1, except that a negative electrode was produced in the same manner as in Example 1 except that the negative-electrode material (3) was used instead of the negative-electrode material (1), and the produced negative electrode was used.

### Example 4

A negative-electrode material (4) was produced in the same manner as in Example 2, except that the composition for forming a coating layer was applied to graphite at a speed of 2 g/min for 72 min. The amount of the oxide in the negative-electrode material (4) was 1 part by mass with respect to 100 parts by mass of graphite. Also, it was confirmed using the above method that the oxide contained in the coating layer was amorphous in the negative-electrode material (4).

A model cell was produced in the same manner as in Example 1, except that a negative electrode was produced in the same manner as in Example 1 except that the negative-electrode material (4) was used instead of the negative-electrode material (1), and the produced negative electrode was used.

### Example 5

A negative-electrode material (5), which is made of graphite having a coating layer containing an oxide (Li₃PO₄) with lithium-ion conductivity on a surface of the graphite, was obtained by kneading 20 g of graphite and 1 g of Li₃PO₄ well. The amount of the oxide in the negative-electrode material (5) was 5 parts by mass with respect to 100 parts by mass of graphite.

A model cell was produced in the same manner as in Example 1, except that a negative electrode was produced in the same manner as in Example 1 except that the negative-electrode material (5) was used instead of the negative-electrode material (1), and the produced negative electrode was used.

### Example 6

The same composition for forming a coating layer as prepared in Example 1 was applied to 300 g of hard carbon at a speed of 4 g/min for 190 min. A negative-electrode material (6), which is made of hard carbon having a coating layer containing an oxide (Li₄Ti₅O₁₂) with lithium-ion conductivity on a surface of the hard carbon, was obtained by firing the obtained powder at 400°C for 30 min. The amount of the oxide in the negative-electrode material (6) was 6.72 parts by mass with respect to 100 parts by mass of hard carbon.

A model cell was produced in the same manner as in Example 1, except that a negative electrode was produced in the same manner as in Example 1 except that the negative-electrode material (6) was used instead of the negative-electrode material (1), and the produced negative electrode was used.

### Comparative Example 1

A negative-electrode material (7) was produced in the same manner as in Example 2, except that the composition for forming a coating layer was applied to graphite at a speed of 2 g/min for 36 min. The amount of the oxide in the negative-electrode material (7) was 0.5 parts by mass with respect to 100 parts by mass of graphite. Also, it was confirmed using the above method that the oxide contained in the coating layer was amorphous in the negative-electrode material (7).

A model cell was produced in the same manner as in Example 1, except that a negative electrode was produced in the same manner as in Example 1 except that the negative-electrode material (7) was used instead of the negative-electrode material (1), and the produced negative electrode was used.

### Comparative Example 2

A model cell was produced in the same manner as in Example 1, except that a negative electrode was produced in the same manner as in Example 1 except that graphite that was not provided with a coating layer on a surface of the graphite was used instead of the negative-electrode material (1), and the produced negative electrode was used.

### Comparative Example 3

A model cell was produced in the same manner as in Example 1, except that a negative electrode was produced in the same manner as in Example 1 except that hard carbon that was not provided with a coating layer on a surface of the hard carbon was used instead of the negative-electrode material (6), and the produced negative electrode was used.

The model cells of the examples and the comparative examples were evaluated as follows.

### Evaluation of CC Capacity

Each model cell was charged to a voltage of 0.62V with a constant current at a current value of 0.05 C while being subjected to pressure (1 t/cm²) at a temperature of 23°C, subsequently charged with a voltage of 0.62 V until the current value reached 0.01 C, and was then discharged at a current value of 0.05 C until the voltage reached 1.88 V. This series of steps was repeated twice, and the capacity at the second instance of charging at a constant current and the capacity (initial capacity) at the second instance of discharging were measured. Then, the CC capacity was evaluated by representing a value, which is obtained by dividing the capacity of each model cell at the second instance of charging at a constant current by the initial capacity as a percentage.

### Measurement of Direct-Current Resistance (DCR)

Each model cell obtained after initial capacity measurement was charged at a constant current and charged with a constant voltage while being subjected to pressure (1 t/cm²) at a temperature of 23°C under the same conditions as in the initial capacity measurement, and was then discharged until the state of charge (SOC) reached 50% at a current value of 0.1 C, and was left to stand for 1 hour. The resulting model cell was subjected to pulse discharge for 10 sec at a current value of 0.1 C, and the voltage was then measured. The voltage was determined by subtracting a voltage increase attributed to the solid electrolyte layer and the counter electrode from a voltage difference before and after pulse discharge, and the DCR was calculated based on the determined voltage value.

It can be said that the negative electrode used in a model cell with a smaller DCR obtained using this method can constitute an all-solid-state secondary battery having a lower internal resistance, enhanced load characteristics, and a larger CC capacity.

The results of evaluations above are shown in Table 1 together with the compositions of negative-electrode materials.

**Table 1**

| | Negative-Electrode Material | | | | Results of Evaluation | |
|---|---|---|---|---|---|---|
| | No. | Carbon Material | Oxides | | DCR (Ω) | CC Capacity (%) |
| | | | Type | Amount (parts by mass) | | |
| Ex. 1 | Negative-Electrode Material (1) | Graphite | Li₄Ti₅O₁₂ | 1.91 | 58 | 36 |
| Ex. 2 | Negative-Electrode Material (2) | Graphite | LiNbOs | 2.55 | 50 | 39 |
| Ex. 3 | Negative-Electrode Material (3) | Graphite | LiNbOs | 1.83 | 60 | 30 |
| Ex. 4 | Negative-Electrode Material (4) | Graphite | LiNbOs | 1 | 60 | 30 |
| Ex. 5 | Negative-Electrode Material (5) | Graphite | Li₃PO₄ | 5 | 54 | 33 |
| Ex. 6 | Negative-Electrode Material (6) | Hard Carbon | Li₄Ti₅O₁₂ | 6.72 | 45 | 32 |
| Comp. Ex. 1 | Negative-Electrode Material (7) | Graphite | LiNbOs | 0.5 | 63 | 17 |
| Comp. Ex. 2 | (Graphite) | | - | - | 62 | 15 |
| Comp. Ex. 3 | (Hard Carbon) | | - | - | 62 | 22 |

In each of the model cells produced in Examples 1 to 6, a negative electrode constituted by a molded body made of a negative-electrode mixture that contained a negative-electrode material having a layer containing an appropriate amount of an oxide having lithium-ion conductivity on a surface of a carbon material, and a sulfide-based solid electrolyte was used, and the model cells had a low DCR. Therefore, use of these negative electrodes can improve the load characteristics and the CC capacity of an all-solid-state secondary battery.

In contrast, a negative electrode that contained a negative-electrode material containing a small amount of an oxide on the surface was used in the model cell of Comparative Example 1, and a negative electrode that contained a carbon material that did not have a layer containing an oxide on the surface was used in the model cells of Comparative Examples 2 and 3. However, these model cells had a higher DCR than in the examples.

The present invention may be embodied in other forms without departing from the essential characteristics thereof. The embodiments disclosed in this application are to be considered in all respects as illustrative and not limiting. The scope of the present invention is indicated by the appended claims rather than by the foregoing description, and all changes which come within the meaning and range of equivalency of the claims are intended to be embraced therein.

### Industrial Applicability

The all-solid-state secondary battery according to the present invention may be applied to the same applications as those of conventionally known secondary batteries. However, since the all-solid-state secondary battery according to the present invention includes a solid electrolyte instead of an organic electrolyte solution, it has excellent heat resistance and can thus be favorably used in applications that are exposed to high temperatures.

### Description of Reference Numerals

- 1, 100: All-solid-state secondary battery
- 10: Positive electrode
- 20: Negative electrode
- 30: Solid Electrolyte Layer
- 40: Exterior can
- 50: Sealing can
- 60: Gasket
- 200: Electrode Body
- 300: Positive electrode external terminal
- 400: Negative electrode external terminal
- 500: Laminate-film exterior body

## Claims

1. A negative electrode for an all-solid-state secondary battery, the negative electrode comprising:
a molded body made of a negative electrode mixture containing a solid electrolyte and a negative-electrode material that contains a negative-electrode active material,
wherein the negative-electrode material contains a carbon material as the negative-electrode active material, and a layer containing an oxide having lithium-ion conductivity is formed on a surface of the negative-electrode material,
the amount of the oxide is 1 part by mass or more with respect to 100 parts by mass of the carbon material, and
the negative electrode contains a sulfide-based solid electrolyte as the solid electrolyte.

2. The negative electrode for an all-solid-state secondary battery according to claim 1,
wherein the negative electrode contains a lithium niobium oxide, a lithium titanium oxide, or a lithium phosphorus oxide as the oxide.

3. A method for manufacturing a negative electrode for an all-solid-state secondary battery including a molded body made of a negative electrode mixture containing a solid electrolyte and a negative-electrode material that contains a negative-electrode active material, the method comprising:
a step (A) of forming the negative-electrode material; and
a step (B) of forming the molded body made of the negative electrode mixture using the negative-electrode material obtained through the negative-electrode material formation step (A) and a sulfide-based solid electrolyte,
wherein the negative-electrode material formation step (A) includes:
a step (i-1) of adhering an oxide having lithium-ion conductivity or a material for forming the oxide to a surface of a carbon material, and a step (i-2) of forming a layer containing the oxide on the surface of the carbon material by firing the carbon material that has undergone the step (i-1) such that the amount of the oxide is 1 part by mass or more with respect to 100 parts by mass of the carbon material, or
a step (ii) of forming a layer containing an oxide having lithium-ion conductivity on a surface of a carbon material by kneading the carbon material and the oxide such that the amount of the oxide is 1 part by mass or more with respect to 100 parts by mass of the carbon material.

4. The method for manufacturing a negative electrode for an all-solid-state secondary battery according to claim 3,
wherein firing is performed at a temperature of 450°C or less in the step (i-2).

5. An all-solid-state secondary battery comprising:
a positive electrode;
a negative electrode; and
a solid electrolyte layer located between the positive electrode and the negative electrode,
wherein the all-solid-state secondary battery includes the negative electrode for an all-solid-state secondary battery according to claim 1 or 2 as the negative electrode.
